# EUROPEAN PATENT APPLICATION

(11) **EP 4 406 928 A1**
(43) Date of publication of application: **31.07.2024**
(21) Application number: 22892512.9
(22) Date of filing: 18.10.2022
(51) Int. Cl.: C04B 35/64, C04B 35/44, C04B 35/50, H01S 3/16

(54) **METHOD FOR PRODUCING COMPOSITE OPTICAL CERAMIC ELEMENT**

(30) Priority: 09.11.2021 JP 2021182340
(71) Applicant: Hamamatsu Photonics K.K., Hamamatsu-shi, Shizuoka 435-8558 (JP)
(72) Inventor: CHU Shucheng, Hamamatsu-shi, Shizuoka 435-8558 (JP); KATO Yoshinori, Hamamatsu-shi, Shizuoka 435-8558 (JP); FUJITA Takayoshi, Hamamatsu-shi, Shizuoka 435-8558 (JP); KIMURA Hiroto, Hamamatsu-shi, Shizuoka 435-8558 (JP)
(74) Representative: Grünecker Patent- und Rechtsanwälte PartG mbB
(86) International application number: PCT/JP2022/038794
(87) International publication number: WO 2023/085012

(57) **Abstract**

Provided is a method of manufacturing a composite optical ceramic element including a first ceramic section and a second ceramic section joined to the first ceramic section. The method includes: a first process of preparing a first powder that contains a first transition element and is for the first ceramic section, and a second powder that is different from the first powder in a concentration of the first transition element and is for the second ceramic section; and a second process of disposing the first powder in a first region, disposing the second powder in a second region adjacent to the first region, and bringing the first powder and the second powder into contact with each other at a boundary portion between the first region and the second region to form a contacting state after the first process.

## Description

### Technical Field

The present disclosure relates to a method of manufacturing a composite optical ceramic element.

### Background Art

Patent Literature 1 discloses a method of manufacturing a composite laser element including a transparent crystal body including a region where laser oscillation is possible and a second crystal body that is joined to the transparent crystal body. In this method, first, a green compact of a power composition capable of constituting the transparent crystal body, and a green compact of a powder composition capable of constituting the second crystal body are brought into contact with each other. Then, both the green compacts are heated in a temperature range of 70% to 90% of a melting point to form junction of the transparent crystal body and the second crystal body.

### Citation List

### Patent Literature

Patent Literature 1: Japanese Unexamined Patent Publication No. 2005-327997

### Summary of Invention

### Technical Problem

By the way, as a laser using a composite ceramic, there is known a configuration in which a second ceramic section containing a transition element that absorbs emitted light generated from an optical laser medium is provided in a ring shape on an outer side of a first ceramic section that becomes a laser medium. As a method of manufacturing the laser, for example, there is a method in which the first ceramic section and the second ceramic section are manufactured separately from each other, and the ceramic sections are subjected to precision machining and precision polishing and are pressed against each other.

However, in the manufacturing method, the first ceramic section and the second ceramic section which are manufactured in advance do not come into close contact sufficiently with each other, voids are generated in a joint portion, and thus a joining failure is likely to occur. In addition, when voids are generated in the joint portion (when the air is interposed in the joint portion), there is a concern that optical characteristics may deteriorate. In addition, in the manufacturing method, a concentration of a transition element varies sharply at the joint portion of the first ceramic section and the second ceramic section. This creates a sharp thermal gradient during use and causes thermal distortion. Accordingly, in the manufacturing method, due to the problems, the quality of the laser light may deteriorate, or the laser medium may be damaged and thus optical characteristics may deteriorate.

In contrast to this, Patent Literature 1 discloses a method in which two green compacts are brought into contact with each other as described above. In a case where the two green compacts are brought into contact with each other, the method also includes a case where only any one green compact is manufactured and is loaded into a container, and then a powder composition of the other powder composition is filled in a gap between the green compact and the container and is compressed in addition to a method in which respective green compacts are manufactured in advance and are brought into contact with both green compacts. In this manner, in Patent Literature 1, it is described that when manufacturing the composite laser element, at least one of the powder composition of the transparent crystal body in which laser oscillation is possible and the powder composition of the second crystal body is made into a green compact.

In the method described in Patent Literature 1, since at least one of the powder compositions of two crystal bodies to be joined is made into a green compact, voids may still occur in the joint portion. In addition, it is considered that a sharp thermal gradient due to a sharp variation in the concentration of the transition element at the joint portion, and occurrence of thermal distortion due to the influence of thermal gradient can be suppressed by providing a buffer region where the concentration of the transition element gradually varies at the joint portion. However, in the method disclosed in Patent Literature 1, it is difficult to consider that the buffer region is sufficiently formed for the same reason. Therefore, in the method disclosed in Patent Literature 1, there is room for an improvement in suppression of the deterioration of the optical characteristics.

Here, an object of the present disclosure is to provide a method of manufacturing a composite optical ceramic element capable of suppressing a deterioration of optical characteristics.

### Solution to Problem

A method of manufacturing a composite optical ceramic element according to the present disclosure is a method of manufacturing a composite optical ceramic element including a first ceramic section and a second ceramic section joined to the first ceramic section. The method includes: a first process of preparing a first powder that contains a first transition element and is for the first ceramic section, and a second powder that does not contain the first transition element and is for the second ceramic section; a second process of disposing the first powder in a first region, disposing the second powder in a second region adjacent to the first region, and bringing the first powder and the second powder into contact with each other at a boundary portion between the first region and the second region to form a contacting state after the first process; and a third process of sintering the first powder and the second powder while maintaining the contacting state to respectively form the first ceramic section and the second ceramic section from the first powder and the second powder after the second process, thereby forming a composite body.

In the manufacturing method, first, the first powder containing the first transition element and the second powder that is different from the first powder in the concentration of the first transition element are prepared. Next, the first powder is disposed in the first region, and the second powder is disposed in the second region to bring the first powder and the second powder into contact with each other, thereby forming a contacting state. In addition, the first powder and the second powder are sintered while maintaining the contacting state to respectively form the first ceramic section and the second ceramic section from the first powder and the second powder, thereby forming a composite body. In this way, when the first powder and the second powder which have fluidity are brought into contact with each other, the powders are mixed with each other in the contact region, and thus the first transition element diffuses. Accordingly, when subsequently performing sintering, voids are less likely to be formed between the first ceramic section and the second ceramic section, and a buffer region where the first transition element diffuses and a concentration of the first transition element gradually varies is formed sufficiently. Accordingly, it is possible to suppress deterioration of optical characteristics of the composite optical ceramic element. In addition, in the manufacturing method, precision machining of a shape of a ceramic and precision polishing of a joint surface as in a method in the related art are not necessary, and the cost is reduced. In addition, in the second powder, description of "concentration of the first transition element is different from the first powder" also includes a case where the second powder does not contain the first transition element.

In the method of manufacturing a composite optical ceramic element according to the present disclosure, the first powder and/or the second powder may contain a raw material powder of a ceramic. The first powder and/or the second powder may be formed in a powder shape by pulverizing a ceramic formed in advance, but may contain a raw material powder of a ceramic as in this case. In this case, as compared with a case of using powders obtained by pulverizing a ceramic, a shrinkage rate during sintering is improved, and adhesiveness of a joint portion is increased, and thus a joining failure (occurrence of voids, and the like) can be suppressed. Accordingly, a deterioration of optical characteristics due to occurrence of the joining failure can be reliably suppressed.

In the method of manufacturing a composite optical ceramic element according to the present disclosure, the second powder may contain a second transition element different from the first transition element, and in a case where the first powder contains the second transition element, a concentration of the second transition element in the first powder may be different from a concentration of the second transition element in the second powder. In this way, the first powder may not contain the second transition element, but in a case of containing the second transition element, the concentration of the second transition element may be set to be different from the concentration of the second transition element in the second ceramic section.

In the method of manufacturing a composite optical ceramic element according to the present disclosure, in the second process, the contacting state may be formed by respectively disposing the first powder and the second powder in the first region and the second region in a state in which the first region and the second region are separated from each other with a partition member, and then removing the partition member. In this case, for example, when a container including the first region and the second region is prepared and a partition member is provided in the container, a composite optical ceramic element including a joint portion with a complicated shape in correspondence with a shape of the partition member can be easily manufactured.

The method of manufacturing a composite optical ceramic element according to the present disclosure may further include a fourth process of forming an optical surface by polishing at least one surface of the composite body after the third process. In this case, a composite optical ceramic element including an optical surface can be manufactured.

In the method of manufacturing a composite optical ceramic element according to the present disclosure, in the second process, a contact region between the first powder and the second powder may be formed in an annular shape by forming the contacting state by disposing the second powder in the second region formed in the annular shape to surround the first region. In this case, a buffer region can be formed with respect to a direction from an inner side of the annular contact region to an outer side thereof.

The method of manufacturing a composite optical ceramic element according to the present disclosure may further include a fifth process of compression molding the first powder and the second powder while maintaining the contacting state after the second process and before the third process. In this case, handling becomes easy.

### Advantageous Effects of Invention

According to the present disclosure, it is possible to provide a method of manufacturing a composite optical ceramic element capable of suppressing a deterioration of optical characteristics.

### Brief Description of Drawings

FIG. 1 is a view illustrating a composite optical ceramic element according to an embodiment.
FIG. 2 is a plan view illustrating the optical element illustrated in FIG. 1 in more detail.
FIG. 3 is a view illustrating a concentration of a transition element in the optical element illustrated in FIG. 2.
FIG. 4 is a flowchart illustrating a process of a method of manufacturing the optical element illustrated in FIG. 1 to FIG. 3.
FIG. 5 is a view illustrating a process of a manufacturing direction illustrated in FIG. 4.
FIG. 6 is a view illustrating a process of the manufacturing direction illustrated in FIG. 4.
FIG. 7 is a view illustrating a process of the manufacturing direction illustrated in FIG. 4.
FIG. 8 is a view illustrating a process of the manufacturing direction illustrated in FIG. 4.
FIG. 9 is a view illustrating a process of the manufacturing direction illustrated in FIG. 4.
FIG. 10 is an image of an example of an optical element obtained by the manufacturing method illustrated in FIG. 4.
FIG. 11 is a view illustrating another optical element manufactured by the manufacturing method according to this embodiment.
FIG. 12 is a plan view illustrating an optical element according to a first modification example.
FIG. 13 is a view illustrating a concentration of a transition element in the optical element illustrated in FIG. 12. FIG. 3(a) is a conceptual diagram illustrating a concentration distribution of the transition element in a region AR in FIG. 2 in an enlarged manner, and FIG. 3(b) is a graph illustrating the concentration distribution of the transition element. FIG. 13 is a view illustrating a concentration of the transition element in a region CR illustrated in FIG. 12.
FIG. 14 is a view illustrating an optical element according to a second modification example.
FIG. 15 is a view illustrating an optical element according to a third modification example.
FIG. 16 is a view illustrating an optical element according to another modification example.

### Description of Embodiments

Hereinafter, an embodiment will be described with reference to the accompanying drawings. In description of each of the drawings, the same reference numeral will be given to the same or equivalent element, and redundant description thereof may be omitted.

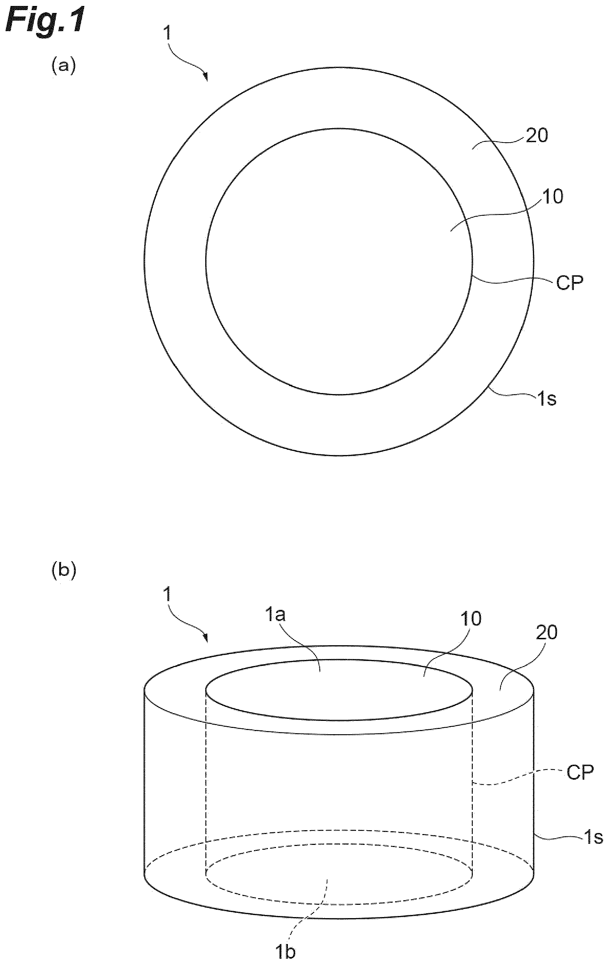

FIG. 1 is a view illustrating a composite optical ceramic element according to this embodiment. FIG. 1(a) is a plan view and FIG. 1(b) is a perspective view. The composite optical ceramic element (hereinafter, referred to as "optical element") illustrated in FIG. 1 is a laser element as an example. An optical element 1 includes a first ceramic section 10 having a columnar shape (here, a cylindrical shape), and a second ceramic section 20 that is provided to surround the first ceramic section 10 and has a tubular shape (here, a cylindrical shape).

The first ceramic section 10 is, for example, a laser medium, and contains a ceramic and a first transition element. The ceramic of the first ceramic section 10 is YAG (Y₃A₁₅O₁₂) as an example, and the first transition element is Nd as an example. For example, the second ceramic section 20 has a function of absorbing emitted light generated in the laser medium to prevent reflection of the emitted light (suppresses parasitic oscillation), and contains a ceramic and a second transition element. As an example, the ceramic of the second ceramic section 20 is similar to the ceramic of the first ceramic section 10, and is, for example, YAG (Y₃A₁₅O₁₂). The second transition element is different from the first transition element, and is Sm as an example.

The optical element 1 includes a first end surface 1a and a second end surface 1b in a direction intersecting a direction (for example, a radial direction) from the first ceramic section 10 toward the second ceramic section 20. For example, the first end surface 1a and the second end surface 1b are surfaces along the radial direction of the optical element 1. For example, the first end surface 1a and the second end surface 1b are optical surfaces having a certain optical function such as light incident/emitting surface and a reflecting surface in the optical element 1.

However, the optical element 1 is not limited to the laser element, and may be a light-emitting body including a scintillator element, a white light source, or the like. In addition, the optical element 1 may be a light-absorbing body. With regard to the ceramic and the transition element, various materials can be used. As an example, examples of the ceramic include oxides having a garnet structure such as Lu₃Al₅O₁₂, Y₃(Al, Ga)₅O₁₂, and Ga₃Sc₂Al₃O₁₂, oxides of rare-earth elements such as Sc₂O₃, Gd₂O₃, and Lu₂O₃, aluminum-based oxides such as sapphire (Al₂O₃) and alexandrite (BeAl₂O₄), fluorides such as LiSrAlF₆ and LiCaAlF₆, Hf oxides such as SrHfO₃, and the like.

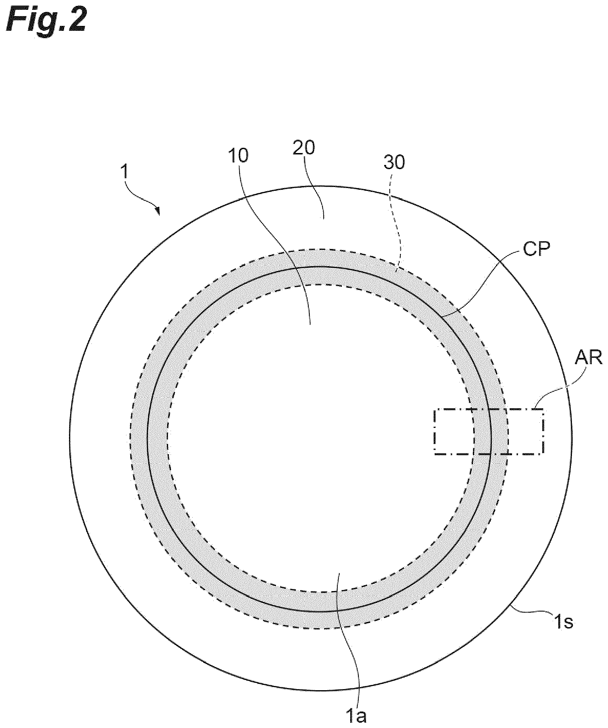

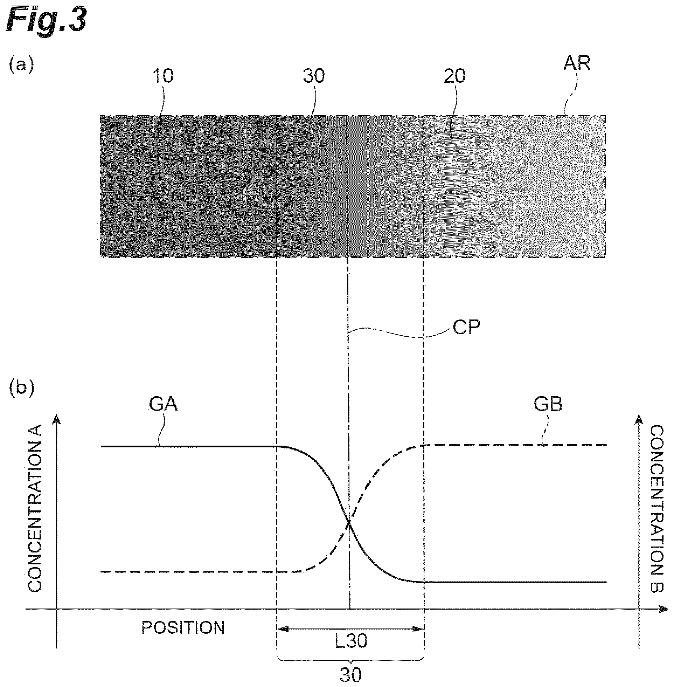

FIG. 2 is a plan view illustrating the optical element illustrated in FIG. 1 in more detail. FIG. 3 is a view illustrating a concentration of a transition element in the optical element illustrated in FIG. 2. FIG. 3(a) is a conceptual diagram illustrating a concentration distribution of the transition element in a region AR in FIG. 2 in an enlarged manner, and FIG. 3(b) is a graph illustrating the concentration distribution of the transition element. As illustrated in FIG. 1 to FIG. 3, the first ceramic section 10 and the second ceramic section 20 form a joint portion CP. The joint portion CP is formed in a tubular shape (here, a cylindrical shape) similarly to an external shape of the second ceramic section 20. Note that, here, a side surface of the second ceramic section 20 constitutes a side surface 1s of the optical element 1.

In the optical element 1, a buffer region 30 in which a concentration A of the first transition element gradually decreases in a direction from the first ceramic section 10 toward the second ceramic section 20 (here, a direction from the center in a radial direction toward an outer side) is formed (refer to a graph GA). In addition, in the optical element 1, a buffer region 30 in which a concentration B of the second transition element gradually decreases in a direction from the second ceramic section 20 toward the first ceramic section 10 (here, a direction from the outer side in the radial direction toward the center) is formed (refer to a graph GB). The buffer region 30 is formed, for example, in a tubular shape (here, a cylindrical shape) centering around the joint portion CP.

In other words, a position where the concentration A of the first transition element and/or the concentration B of the second transition element decrease to a value equal to or less than a certain value (for example, the half value) can be referred to as the joint portion CP, and a region around the joint portion CP can be referred to as the buffer region 30. Note that, lengths in which the concentration A of the first transition element and the concentration B of the second transition element decrease to a certain value are not necessary to match each other (may match each other). In this case, a length L30 of the buffer region 30 with the concentration A of the first transition element set as a reference, and a length L30 of the buffer region 30 with the concentration B of the second transition element set as a reference may do not match each other (may match each other).

Note that, the entire dimension (a width, here, a diameter) of the optical element 1 in a plan view is, for example, approximately 25 mm to 100 mm, and a width of the second ceramic section 20 in the dimension is, for example, approximately 5 mm. In addition, the length L30 (length in a radial direction) of the buffer region 30 is 100 µm or more as an example. A ratio of the length L30 of the buffer region 30 to the entire dimension of the optical element 1 in a plan view can be set to 0.1% or more as an example.

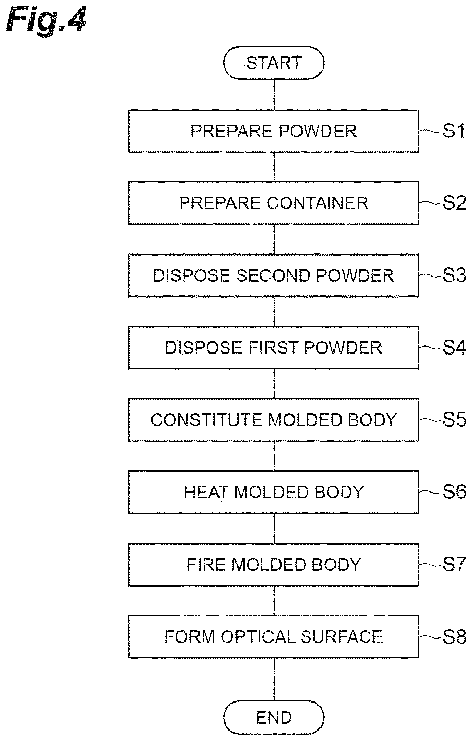

Next, a method of manufacturing the optical element 1, that is, a method of manufacturing the composite optical ceramic element according to this embodiment will be described. FIG. 4 is a flowchart illustrating a process of the method of manufacturing the optical element illustrated in FIG. 1 to FIG. 3. As illustrated in FIG. 4, in the manufacturing method, first, a first powder that is a source of the first ceramic section 10 and a second powder that is a source of the second ceramic section 20 are prepared (process S1: first process).

In the process S1, first, a first powder that is a raw material mixed powder containing the first transition element is prepared. Therefore, raw material powders of a ceramic and the first transition element are weighed in an appropriate ratio. Next, an additive such as a binder is added to the raw material powder, and slurry is adjusted by wet pulverization and mixing. Next, the slurry is dried and dry pulverization is performed. According to this, the first powder that is a ceramic raw material mixed powder containing the first transition element is obtained. That is, the first powder contains the ceramic raw material powder. On the other hand, a second powder that is a raw material mixed powder containing the second transition element different from the first transition element is prepared in the same process. Here, the second powder does not contain the first transition element. That is, here, a concentration of the first transition element in the second powder is 0% different from the first powder. In addition, the second powder also contains a ceramic raw material powder as in the first powder. Note that, the order of the preparation of the first powder and the preparation of the second powder does not matter. In addition, the raw material powder represents a (mixed) raw material that becomes a target ceramic after being sintered. As an example, raw materials of an YAG (Y₃Al₅O₁₂) ceramic are Y₂O₃ and Al₂O₃, the first transition element raw material is Nd₂O₃ as an example, and the second transition element raw material is Sm₂O₃ as an example. Here, the first powder does not contain the second transition element (Sm), that is, a concentration of the second transition element in the first powder is 0%.

Here, a process of granulating the first powder and/or the second powder may be performed as necessary. Through the granulation, fluidity of each of the powders is raised, and a particle diameter of the each powder becomes uniform, and thus when both the powders come into contact with each other, the powders are likely to be mixed with each other. The particle size (average secondary particle size) of the first powder and the second powder is from 1 µm to 50 µm as an example. When the particle size is 1 µm or more, the fluidity of the powders is improved. In addition, when the particle size is 50 µm or less, transparency of a molded body increases. The fluidity of the powders and the length of the buffer region can be adjusted by controlling the particle size.

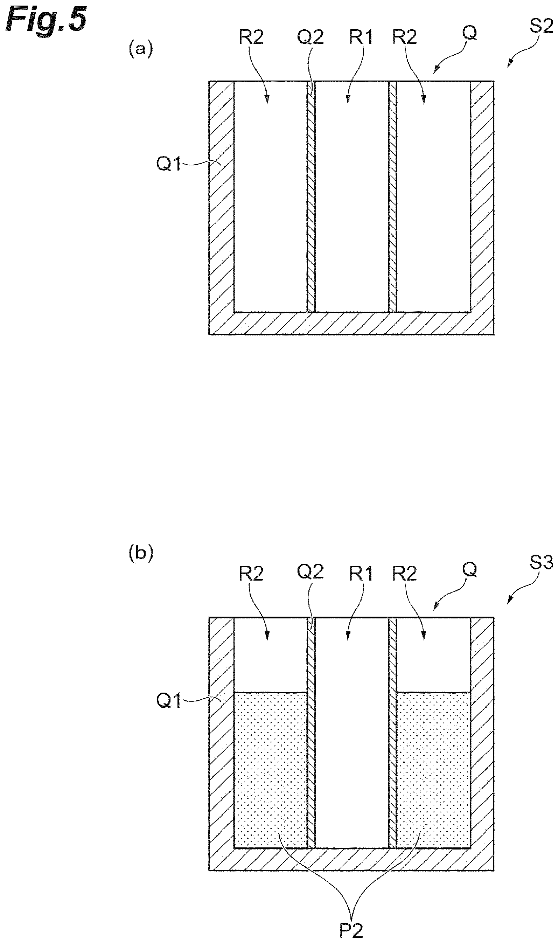

Next, as illustrated in FIG. 5(a), a container Q is prepared (process S2). The container Q includes, for example, an outer container Q1 that is a mold, and an inner container Q2 that is removable disposed inside the outer container Q1. The outer container Q1 is formed in a box shape in which one side is opened. An inner wall surface of the outer container Q1 defines a shape of the side surface 1s of the optical element 1. Accordingly, an inner wall surface of the outer container Q1 has the same external shape as an external shape of the optical element 1 (here, an external shape of the second ceramic section 20). Here, the inner wall surface of the outer container Q1 has a cylindrical shape.

The inner container Q2 is formed in a tubular shape of which both ends are opened. A shape of the inner container Q2 defines an external shape of the first ceramic section 10 and a shape of the joint portion CP. Accordingly, here, the inner container Q2 is formed in a cylindrical shape. The inner container Q2 is constituted to be thinner as compared with the outer container Q1, and can be formed, for example, by paper, a resin film, a metal film, a metal plate, or the like. The inner container Q2 is disposed to be spaced apart from the inner wall surface of the outer container Q1. According to this, in the container Q, a first region R1 inside the inner container Q2, and a second region R2 between the inner container Q2 and the outer container Q1 are formed.

In other words, the inner container Q2 is a partition member that separates the first region R1 and the second region R2 from each other in the container Q. The first region R1 is formed in a columnar shape (circular column shape) in correspondence with the first ceramic section 10, and the second region R2 is formed in a tubular shape (cylindrical shape) to surround the first region R1 in correspondence with the second ceramic section 20.

The thickness of the inner container Q2 (partition member) is, for example, approximately 0.1 mm to 1 mm. When the thickness of the inner container Q2 is 0.1 mm or more, a distance between the first region R1 and the second region R2 increases, and when the inner container Q2 is removed, the first powder and the second powder are likely to be mixed, and a boundary region with a sufficient length is formed. When the thickness of the inner container Q2 is 1 mm or less, when the inner container Q2 is removed, the shape of the first region R1 and the second region R2 is likely to be maintained (an interface does not become rough) in the vicinity of a boundary between the first powder and the second powder. In addition, a distance between the first region R1 and the second region R2 is likely to be shortened, and the boundary region can be prevented from being lengthened more than necessary.

The inner container Q2 (partition member) partitions the first region R1 and the second region R2 in a vertical direction (direction in which gravidity acts). In a case where the first region R1 and the second region R2 are partitioned in the vertical direction, when the inner container Q2 (partition member) is removed, the powders are more likely to be mixed in the boundary region between the first powder and the second powder as compared with a case where the partition member partitions the first region R1 and the second region R2 in a direction orthogonal to the vertical direction.

In the subsequent process, as illustrated in FIG. 5(b), the second powder P2 prepared in the process S 1 is disposed in the second region R2 (process S3: second process). The second powder P2 is in a powder state and has fluidity. Accordingly, the second powder P2 is introduced into the second region R2 in the process S3, and thus the second powder P2 temporarily has the same shape as the shape of the second region R2 as a whole.

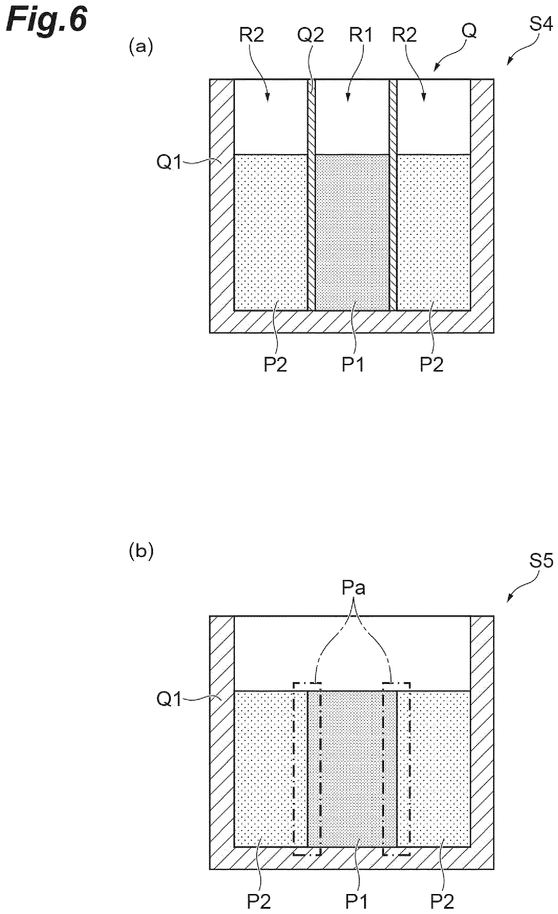

In the subsequent process, as illustrated in FIG. 6(a), the first powder P1 prepared in the process S 1 is disposed in the first region R1 (process S4: second process). The first powder P1 is in a powder state and has fluidity. Accordingly, the first powder P1 is introduced into the first region R1 in the process S4, and temporarily has the same shape as the shape of the first region R1 as a whole. In this manner, in the processes S3 and S4, in a state in which the first region R1 and the second region R2 are separated from each other by the inner container Q2, the first powder P1 and the second powder P2 are disposed in the first region R1 and the second region R2, respectively. In addition, the order of the process S3 and the process S4 is not limited.

In the subsequent process, a molded body containing the first powder P1 and the second powder P2 is formed (process S5: second process). The process S5 will be described in more detail. In the process S5, first, as illustrated in FIGS. 6(a) and 6(b), the inner container Q2 that separates the first region R1 and the second region R2 is removed, and thus the first powder P1 and the second powder P2 are brought into contact with each other at the boundary portion between the first region R1 and the second region R2 to form a contacting state.

According to this, a contact region Pa between the first region R1 and the second region R2 is formed. The contact region Pa is formed in a tubular shape (here, a cylindrical shape) similarly to the inner container Q2. In the contact region Pa, the first powder P1 and the second powder P2 are mutually dispersed and are in a partially mixed state. In this manner, in the processes S3 to S5, powders having fluidity are brought into contact with each other.

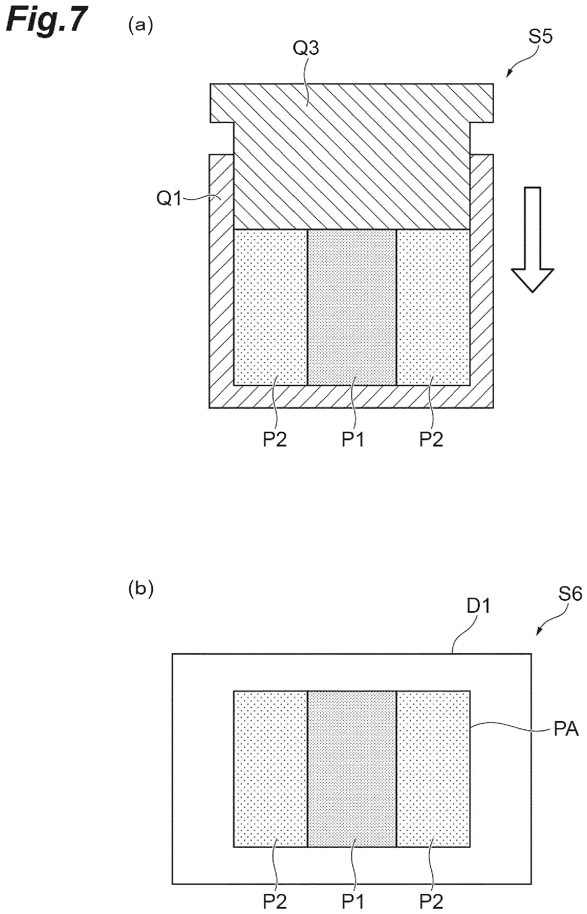

Next, as illustrated in FIG. 7(a), in the process S5, as described above, in a state in which the contacting state between the first powder P1 and the second powder P2 is formed, the entirety of the first powder P1 and the second powder P2 is pressed by a pressing member Q3 to perform compression molding, thereby forming a molded body PA in which the first powder P1 and the second powder P2 are integrated (with regard to the molded body PA, refer to FIG. 7(b)) (fifth process). According to this, the first powder P1 and the second powder P2 are integrated while maintaining the contacting state, and thus handling becomes easy in the subsequent process. In addition, in the process of pressing the entirety of the first powder P1 and the second powder P2, "cold isostatic pressing (CIP)" may be performed in order to increase a density of the molded body PA as necessary.

In the subsequent process, as illustrated in FIG. 7(b), the molded body PA formed in the process S5 is disposed in a predetermined heating device D1, and the molded body PA is heated (process S6). According to this, additives such as an organic material contained in the molded body PA (that is, the first powder P1 and the second powder P2) are removed and degreased (temporary firing is performed).

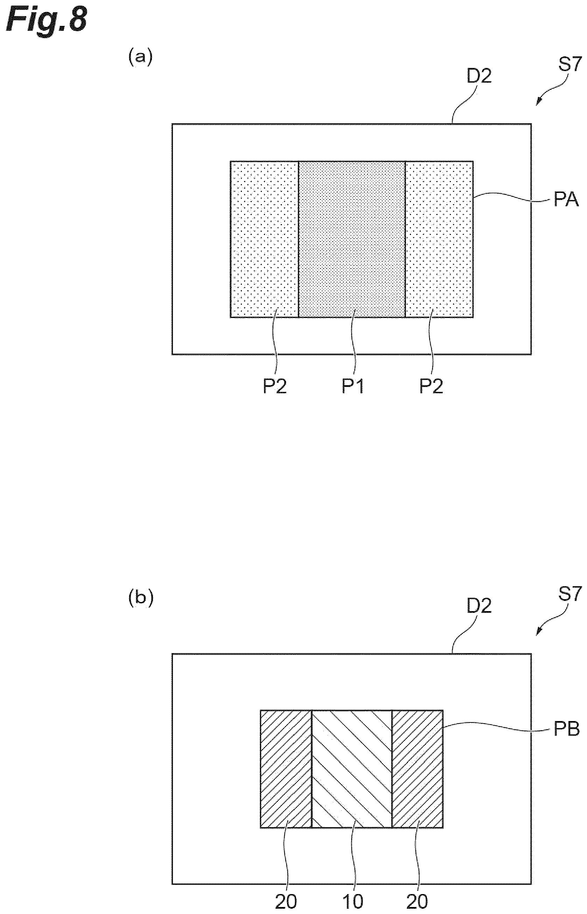

Next, as illustrated in FIG. 8(a), the molded body PA that has undergone the process S6 is disposed in a predetermined heating device D2 (process S7: third process). Then, as illustrated in FIG. 8(b), the molded body PA is fired to form the first ceramic section 10 from the first powder P1 and to form the second ceramic section 20 from the second powder P2, thereby constituting a composite body PB thereof (process S7: third process) (main firing is performed). As described above, in the molded body PA, the contacting state between the first powder P1 and the second powder P2 is maintained. Accordingly, in the process S7, the first powder P1 and the second powder P2 are sintered while maintaining the contacting state between the first powder P1 and the second powder P2 to respectively form the first ceramic section 10 and the second ceramic section 20 from the first powder P1 and the second powder P2, thereby forming the composite body PB. Note that, the heating device D1 and the heating device D2 may be the same device or devices different from each other.

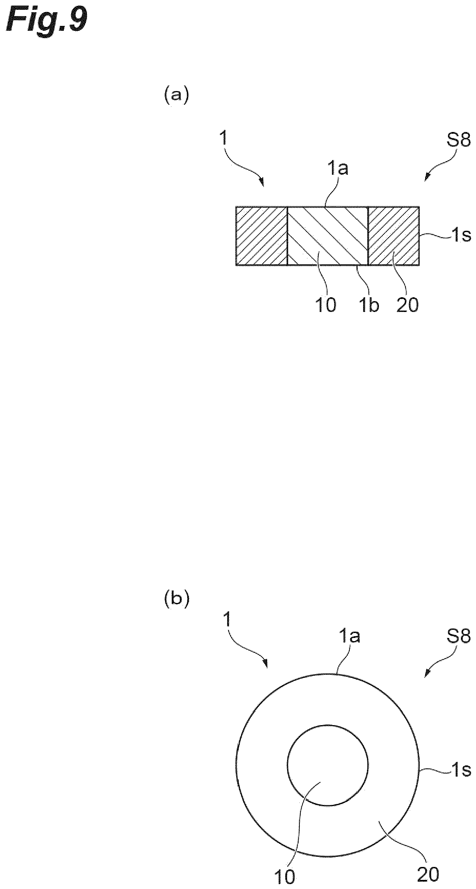

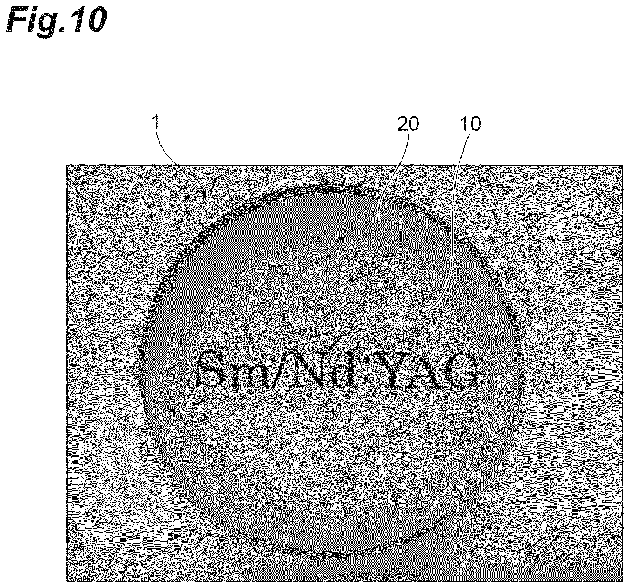

Then, as illustrated in FIG. 9, at least one surface of the composite body PB formed in the process S7 is polished to form an optical surface (process S8: fourth process). Here, both end surfaces in a direction intersecting a direction from the first ceramic section 10 to the second ceramic section 20 in the composite body PB are polished to form the first end surface 1a and the second end surface 1b which are optical surfaces. According to this, the optical element 1 is obtained. An image of an example of the optical element 1 obtained as described above is shown in FIG. 10. In the optical element 1 illustrated in FIG. 10, YAG is used as the ceramic of the first ceramic section 10 and the second ceramic section 20, Nd is used as the first transition element, and Sm is used as the second transition element.

Here, the second ceramic section 20 in this embodiment has a function of absorbing emitted light generated in the first ceramic section 10 by an effect of Sm that is the second transition element to prevent reflection of the emitted light (suppressing parasitic oscillation). Significant heat is generated in the second ceramic section 20 due to absorption of the emitted light, but since the buffer region 30 that is sufficiently long is formed, it is possible to reliably suppress thermal distortion due to a sharp thermal gradient in use of the optical element 1.

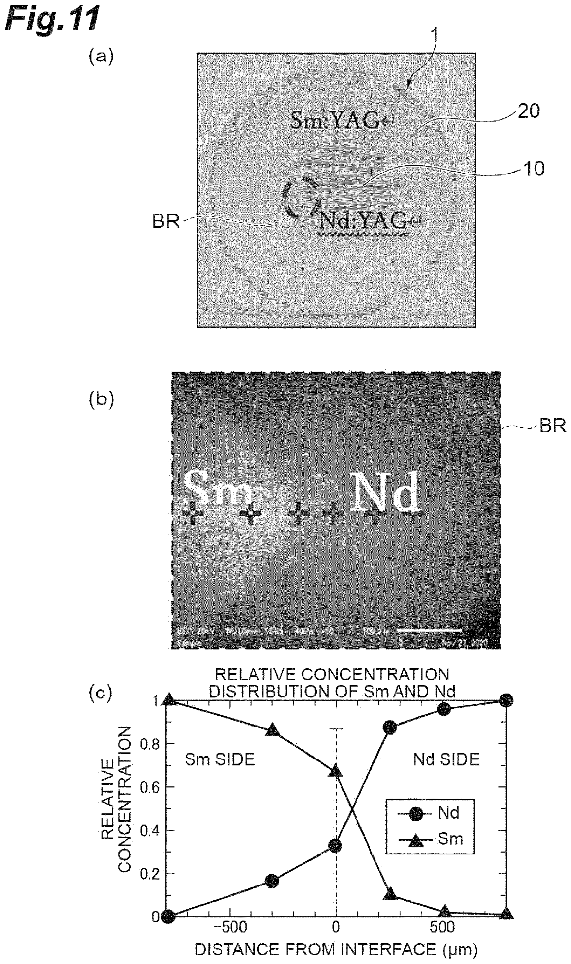

FIG. 11 is a view illustrating another optical element manufactured by the manufacturing method according to this embodiment. FIG. 11(a) is an image in a plan view, FIG. 11(b) is an enlarged image of a region BR in FIG. 11(a), and FIG. 11(c) is a graph illustrating a concentration distribution of a transition element. Respective graphs in FIG. 11 show concentration measurement results at six points illustrated in FIG. 11(b). As illustrated in FIG. 11, it can be understood that in the vicinity of an interface between the first ceramic section 10 and the second ceramic section 20, a buffer region of approximately several hundreds of µm to approximately 1 mm is formed in such a manner that a relative concentration of the transition element (Sm or Nd) gradually decreases or gradually increases as going from one side of the first ceramic section 10 and the second ceramic section 20 to the other side thereof.

As described above, in the manufacturing method according to this embodiment, first, the first powder P1 containing the first transition element and the second powder P2 that does not contain the first transition element (here, containing the second transition element) are prepared. Next, the first powder P1 is disposed in the first region R1, and the second powder P2 is disposed in the second region R2 to bring the first powder P1 and the second powder P2 into contact with each other, thereby forming a contacting state. Then, the first powder P1 and the second powder P2 are sintered while maintaining the contacting state to respectively form the first ceramic section 10 and the second ceramic section 20 from the first powder P1 and the second powder P2, thereby forming a composite body PB.

In this way, when the first powder P1 and the second powder P2 which have fluidity are brought into contact with each other, the powders are mixed with each other in the contact region Pa thereof, and the first transition element diffuses. Accordingly, when the powders are subsequently sintered, voids (defects) are less likely to be formed between the first ceramic section 10 and the second ceramic section 20, and the first transition element diffuses, and thus the buffer region 30 in which the concentration of the first transition element gradually varies is sufficiently formed. According to this, thermal distortion due to the sharp thermal gradient is suppressed in use of the optical element 1. Accordingly, a deterioration of optical characteristics of the composite optical ceramic element (optical element 1) can be suppressed. Note that, in the manufacturing method, precision machining of a shape of a ceramic and precision polishing of a joint surface as in a method in the related art are not necessary, and the cost is reduced. Note that, "diffusion" noted here represents diffusion due to mixing of powders when the powders come into contact with each other rather than diffusion of atoms due to heat.

Note that, in the method described in Patent Literature 1, pressure molding is required at least twice, pressure molding for forming a green compact and pressure molding for integrating the green compact and a powder are required. In addition, in a case where the green compact and the powder are combined and pressure molded, a difference in a density thereof becomes large, and it is difficult to manufacture a large-sized element. In contrast, in the manufacturing method according to this embodiment, powders in contact with each other are collectively pressure molded, pressure molding performed once is sufficient. In addition, since the powders are collectively molded, a difference in a density thereof is relatively small, and manufacturing of a large-sized element is easy.

In addition, in the manufacturing method according to this embodiment, the first powder P1 and the second powder P2 contain a raw material powder of a ceramic. The first powder P1 and/or the second powder P2 may be formed in a powder shape by pulverizing a ceramic formed in advance, but may contain a raw material powder of a ceramic as in this embodiment. In this case, as compared with a case of using powders obtained by pulverizing a ceramic, a shrinkage rate during sintering is improved, and adhesiveness of a joint portion is increased, and thus a joining failure (occurrence of voids, and the like) can be suppressed. Accordingly, a deterioration of optical characteristics due to occurrence of the joining failure can be reliably suppressed.

In the manufacturing method according to this embodiment, in the processes S2 to S5, in a state in which the first region R1 and the second region R2 are separated from each other by the inner container Q2, the first powder P1 and the second powder P2 are disposed in the first region R1 and the second region R2, respectively, and then a contacting state is formed by removing the inner container Q2. In this case, the optical element 1 including the joint portion CP with a complicated shape in correspondence with a shape of the inner container Q2 can be easily manufactured.

The manufacturing method according to this embodiment includes a process S8 of forming the first end surface 1a and the second end surface 1b which are optical surfaces by polishing the end surfaces of the composite body PB after the process S7. Therefore, it is possible to manufacture the optical element 1 including the optical surfaces.

In the manufacturing method according to this embodiment, in the processes S2 to S5, the second powder P2 is disposed in the second region R2 formed in a tubular shape to surround the first region R1 to form a contacting state, thereby forming the contact region Pa between the first powder P1 and the second powder P2 in a tubular shape. According to this, the buffer region 30 can be formed to correspond to a direction from an inner side of the contact region Pa having a tubular shape toward an outer side thereof.

The above-described embodiment is an example of a method of manufacturing a composite optical ceramic element. Accordingly, the method of manufacturing the composite optical ceramic element according to the present disclosure can be arbitrarily modified. Next, a modification example will be described.

### [First Modification Example]

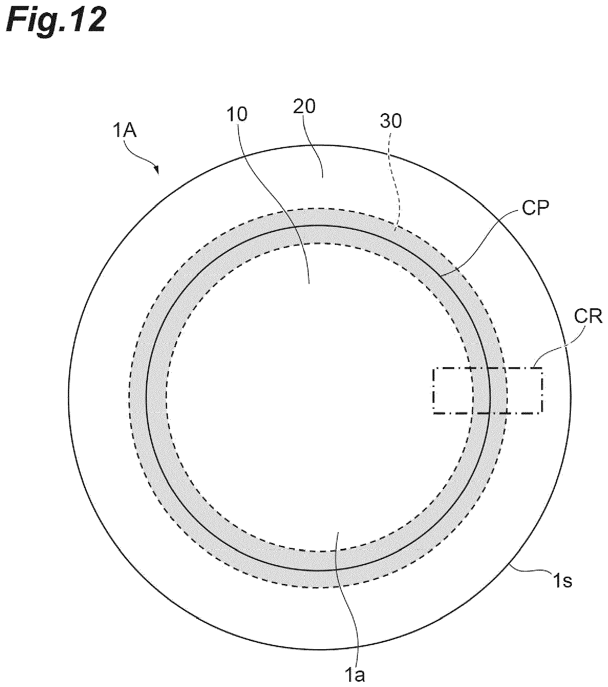

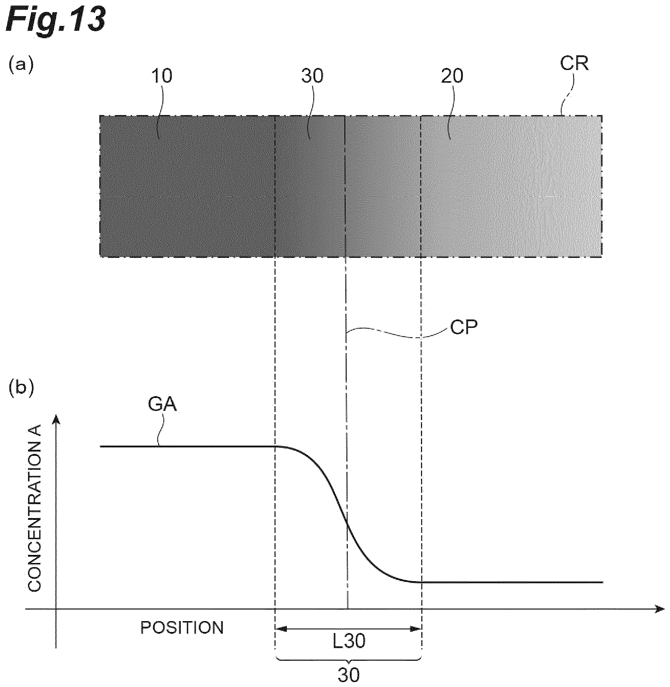

FIG. 12 is a plan view illustrating an optical element according to a first modification example. FIG. 13 is a view illustrating a concentration of a transition element in the optical element illustrated in FIG. 12. FIG. 13(a) is a conceptual diagram illustrating a concentration distribution of a transition element in a region CR in FIG. 12 in an enlarged manner, and FIG. 13(b) is a graph illustrating a concentration distribution of the transition element. As illustrated in FIG. 12 and FIG. 13, as compared with the optical element 1 according to the above-described embodiment, an optical element (composite optical ceramic element) 1A according to a first modification example is different from the optical element 1 in that the second ceramic section 20 does not contain the second transition element. In this way, even in a case where the second ceramic section 20 does not contain the transition element, when using the manufacturing method according to the above-described embodiment, the buffer region 30 where the concentration of the first transition element gradually decreases in a direction from the first ceramic section 10 toward the second ceramic section 20 can be formed in the optical element 1A.

### [Second Modification Example]

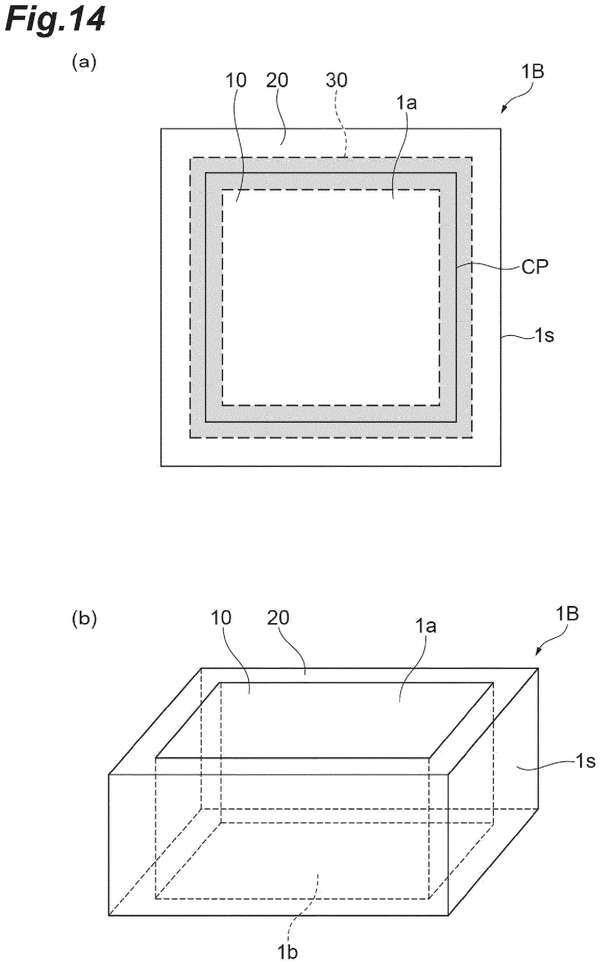

FIG. 14 is a view illustrating an optical element according to a second modification example. FIG. 14(a) is a plan view, and FIG. 14(b) is a perspective view. As illustrated in FIG. 14, as compared with the optical element 1 according to the above-described embodiment, an optical element (composite optical ceramic element) 1B according to the second modification example is different from the optical element 1 in that the first ceramic section 10 is formed in a rectangular column shape (square column shape), and the second ceramic section 20 is formed in a rectangular tube shape. In this case, when an outer container Q1 having a rectangular tube shape and an inner container Q2 having a rectangular tube shape are prepared in the process S2, the joint portion CP and the buffer region 30 can also be formed in a square tube shape while realizing the shapes of the containers. Even in this case, the same effect as in the above-described embodiment is achieved.

Particularly, in a case where the joint portion CP has a corner as in this modification example, a stress is likely to concentrate at the corner, and a joint failure (occurrence of voids, or the like) is likely to occur at a corner interface between the first ceramic section 10 and the second ceramic section 20. According to the method according to the present disclosure, even in this case, a deterioration of optical characteristics due to the joining failure can be effectively suppressed.

### [Third Modification Example]

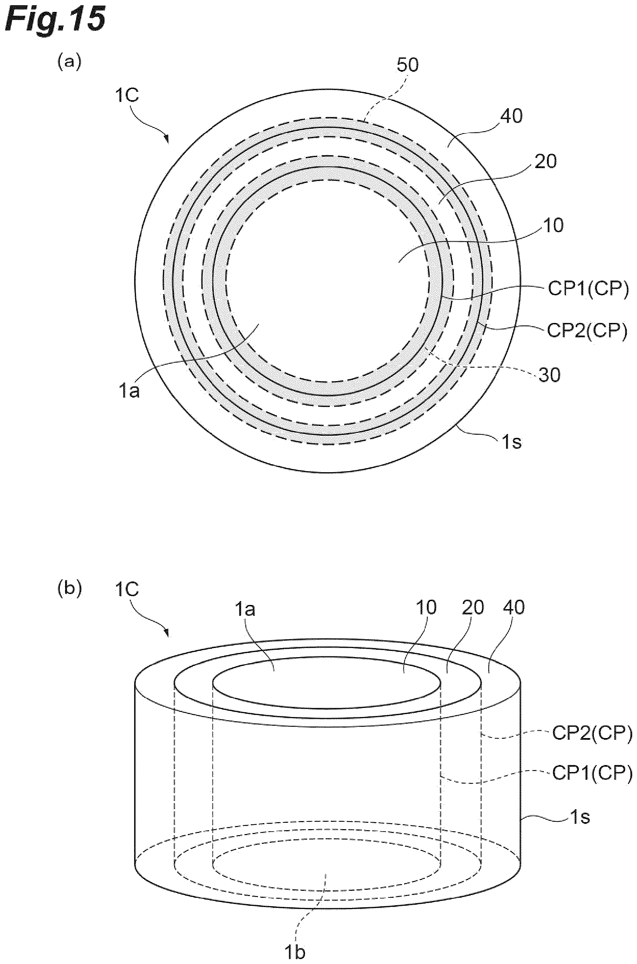

FIG. 15 is a view illustrating an optical element according to a third modification example. FIG. 15(a) is a plan view and FIG. 15(b) is a perspective view. As illustrated in FIG. 15, as compared with the optical element 1 according to the above-described embodiment, an optical element (composite optical ceramic element) 1C according to a third modification example is different from the optical element 1 in that a third ceramic section 40 is formed in a tubular shape (here, a cylindrical shape) to surround the second ceramic section 20.

When manufacturing the optical element 1C, as an example, first, in the process S2, an intermediate container having a tubular shape (cylindrical shape) is provided between the outer container Q1 and the inner container Q2 to surround the inner container Q2. According to this, a third region is formed between the outer container Q1 and the intermediate container, and a second region R2 is formed between the intermediate container and the inner container Q2. In addition, before the process S5, a third powder for the third ceramic section 40 is disposed in the third region between the outer container Q1 and the intermediate container. In addition, the second powder P2 is disposed in the second region R2 and the first powder P1 is disposed in the first region R1. Then, the subsequent processes are performed. According to this, the optical element 1C is obtained.

Accordingly, in the optical element 1C, a joint portion CP1 and the buffer region 30 are formed between the first ceramic section 10 and the second ceramic section 20, and a buffer region 50 is formed between the second ceramic section 20 and the third ceramic section 40. In the buffer region 50, the concentration of the second transition element gradually decreases in a direction from the second ceramic section 20 toward the third ceramic section 40 (here, a direction from the center in a radial direction toward an outer side), and in a case where the third ceramic section 40 contains a transition element, the concentration of the transition element gradually decreases in a direction from the third ceramic section 40 toward the second ceramic section 20 (here, a direction from an outer side in the radial direction toward the center). According to this, even in this case, the same effect as in the first embodiment is achieved.

Particularly, as in this modification example, in a case where three or more ceramic sections are combined, a joining failure (occurrence of voids, or the like) is likely to occur due to a difference in a density and a shrinkage rate between different materials for respective ceramic sections. According to the method according to the present disclosure, even in this case, it is possible to effectively suppress a deterioration of optical characteristics due to the joining failure. In addition, as in this modification example, even in a case where three or more ceramic sections are combined, since the ceramic sections can be collectively molded, a manufacturing process can be simple.

### [Other Embodiments]

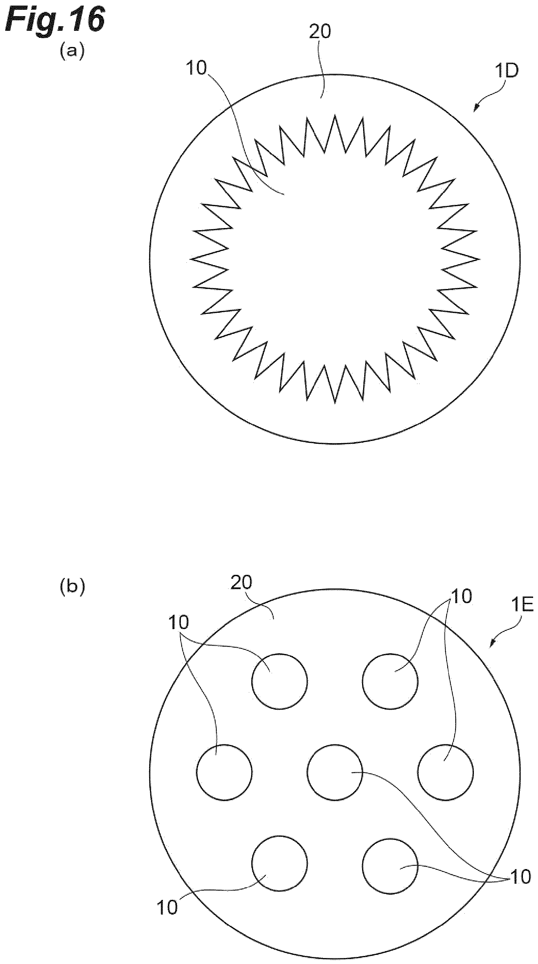

In addition, as illustrated in FIG. 16, when appropriately setting the shapes of the outer container Q1 and the inner container Q2 prepared in the process S2, the first ceramic section 10 and the second ceramic section 20 can be formed in any shape, and other ceramic sections can also be formed. In an optical element 1D illustrated in FIG. 16(a), the first ceramic section 10 is formed in a polygonal column shape, and in an optical element 1E illustrated in FIG. 16(b), a plurality of the first ceramic sections 10 having a columnar shape (here, a circular column shape) are formed in the second ceramic section 20. In a case of FIG. 16(b), when preparing a plurality of the inner containers Q2 in the process S2 and subsequently performing the same processes, the buffer region 30 (not illustrated) having a tubular shape (cylindrical shape) can be formed at the periphery of each of the first ceramic sections 10.

Note that, in the above-described examples, the first powder P1 may not contain a transition element other than the first transition element, or may contain another transition element (for example, the second transition element) in addition to the first transition element. In a case where the first powder P1 contains the second element, the concentration of the second transition element in the first powder P1 may be different from that of the second transition element in the second powder P2. In addition, the second powder P2 may contain the same first transition element as in the first powder p1. In this case, a concentration of the first transition element in the second powder P2 is different from a concentration of the first transition element in the first powder P1. As an example, in a case where the second powder P2 contains the first transition element, the concentration of the first transition element in the second powder P2 may be less than the concentration of the first transition element in the first powder P1.

In addition, the first powder P1 and/or the second powder P2 may contain a ceramic in a powder shape that is formed by pulverizing a ceramic formed in advance in addition to a raw material powder of the ceramic or instead of the raw material powder of the ceramic.

In addition, in the examples described above, a method of manufacturing the optical element 1 in an aspect in which the second ceramic section 20 surrounds the first ceramic section 10 has been exemplified. However, even in a case of manufacturing an optical element in an aspect in which a first ceramic section 10 having a flat plate shape and a second ceramic section 20 having a flat plate shape are stacked, the same manufacturing method is applicable. That is, when the second powder P2 for the second ceramic section 20 is stacked on the first powder P1 for the first ceramic section 10 to form a contacting state, and the powders are sintered while maintaining the contacting state, the buffer region 30 is formed in a stacking direction, and thus the same effect can be achieved.

### Industrial Applicability

A method of manufacturing a composite optical ceramic element capable of suppressing a deterioration of optical characteristics is provided.

### Reference Signs List

1, 1A, 1B, 1C, 1D, 1E: optical element (composite optical ceramic element), 1a: first end surface (optical surface), 1b: second end surface (optical surface), 10: first ceramic section, 20: second ceramic section, 30: buffer region, CP: joint portion, P1: first powder, P2: second powder, R1: first region, R2: second region, Q2: inner container (partition member), PB: composite body.

## Claims

1. A method of manufacturing a composite optical ceramic element including a first ceramic section and a second ceramic section joined to the first ceramic section, the method comprising:
a first process of preparing a first powder that contains a first transition element and is for the first ceramic section, and a second powder that is different from the first powder in a concentration of the first transition element and is for the second ceramic section;
a second process of disposing the first powder in a first region, disposing the second powder in a second region adjacent to the first region, and bringing the first powder and the second powder into contact with each other at a boundary portion between the first region and the second region to form a contacting state after the first process; and
a third process of sintering the first powder and the second powder while maintaining the contacting state to respectively form the first ceramic section and the second ceramic section from the first powder and the second powder after the second process, thereby forming a composite body.

2. The method of manufacturing a composite optical ceramic element according to claim 1,
wherein the first powder and/or the second powder contain a raw material powder of a ceramic.

3. The method of manufacturing a composite optical ceramic element according to claim 1 or 2,
wherein the second powder contains a second transition element different from the first transition element, and
in a case where the first powder contains the second transition element, a concentration of the second transition element in the first powder is different from a concentration of the second transition element in the second powder.

4. The method of manufacturing a composite optical ceramic element according to any one of claims 1 to 3,
wherein in the second process, the contacting state is formed by respectively disposing the first powder and the second powder in the first region and the second region in a state in which the first region and the second region are separated from each other with a partition member, and then removing the partition member.

5. The method of manufacturing a composite optical ceramic element according to any one of claims 1 to 4, further comprising:
a fourth process of forming an optical surface by polishing at least one surface of the composite body after the third process.

6. The method of manufacturing a composite optical ceramic element according to any one of claims 1 to 5,
wherein in the second process, a contact region between the first powder and the second powder is formed in a tubular shape by forming the contacting state by disposing the second powder in the second region formed in the tubular shape to surround the first region.

7. The method of manufacturing a composite optical ceramic element according to any one of claims 1 to 6, further comprising:
a fifth process of compression molding the first powder and the second powder while maintaining the contacting state after the second process and before the third process.
